# EUROPÄISCHE PATENTANMELDUNG

(11) **EP 2 549 710 A2**
(43) Veröffentlichungstag der Anmeldung: **23.01.2013**
(21) Anmeldenummer: 12005128.9
(22) Anmeldetag: 11.07.2012
(51) Int. Cl.: H04L 29/06, H04L 12/22

(54) **Prozessleitsystem**

(30) Priorität: 19.07.2011 DE 102011108003
(71) Anmelder: ABB Technology AG, 8050 Zürich (CH)
(72) Erfinder: Dewitz, Gerd, Dipl.-Ing., 32107 Bad Salzuflen (DE); Prytz, Gunnar, 3430 Spikkestad (NO); Gienke, Michael, 30449 Hannover (DE); Schierholz, Ragnar, 5436 Würenlos (CH); Bollmeyer, Stefan, 32425 Minden (DE); Pauly, Thomas, 723 48 Västeras (SE)
(74) Vertreter: Marks, Frank

(57) **Zusammenfassung**

Die Erfindung betrifft ein Prozessleitsystem bestehend aus einer Mehrzahl räumlich verteilter, miteinander vernetzter Netzwerkteilnehmer (1,2,3,4) mit gesicherter Kommunikation zwischen den Netzwerkteilnehmern (1,3,4) über ein Kommunikationsnetzwerk (6), wobei die Integrität der Kommunikation auf dem Austausch von Zertifikaten (7) basiert. Zum Schutz der Integrität der Kommunikation wird vorgeschlagen, das Prozessleitsystem mit einer zentralen Zertifizierungsstelle (5) auszustatten, die integraler Bestandteil des Prozessleitsystems ist und die Zertifikate (7) zuweist und verteilt.

## Beschreibung

Die Erfindung betrifft ein Prozessleitsystem bestehend aus einer Mehrzahl räumlich verteilter, miteinander vernetzter Teilnehmer mit gesicherter Kommunikation zwischen den Teilnehmern.

Derartige Prozessleitsysteme sind einschlägig bekannt und hinsichtlich ihres Aufbaus und ihrer Funktion beispielsweise in der EP 0 597 561 beschrieben. An ein solches Prozessleitsystem werden seitens der Anlagenbetreiber sehr hohe Anforderungen bezüglich Verfügbarkeit, Integrität und Reaktionszeiten gestellt. Nach dem bekannten Stand der Technik sind die miteinander vernetzten Teilnehmer über herstellerspezifische Bussysteme oder serielle Verbindungen miteinander verbunden, die für den Zugriff aus Standard-IT Komponenten wie Notebooks und PCs eine technische Barriere darstellen. Daraus resultiert eine deutlich reduzierte Angriffsfläche sowohl für bewusst herbeigeführte Manipulationen als auch Beeinträchtigungen der Betriebsbereitschaft in Folge von Seiteneffekten des Fehlverhaltens anderer Systemkomponenten.

Die vermehrte Einführung der Ethernet Technologie zur Kommunikation in der Prozessleittechnik zwischen Anlagenteilen und leittechnischen Funktionen reduzierte diese technische Barriere, dadurch sind insbesondere die Vertraulichkeit und Integrität der übertragenen und verarbeiteten Daten und die Verfügbarkeit der dafür genutzten Dienste auf den Kommunikationsteilnehmern gefährdet. Aus der Veröffentlichung http://de.wikipedia.org/wiki/Ethernet ist weiterhin bekannt, dass von den prinzipbedingten Broadcast-Nachrichten, bei denen jede Information, die von einem Teilnehmer gesendet wird, von jedem anderen Teilnehmer empfangen wird, ein Sicherheitsrisiko ausgeht.

Durch die Anbindung an Ethernet sind diese Komponenten also potentiell wesentlich stärker gefährdet. Um dem entgegenzuwirken wird es notwendig sein, die Kommunikation zum und vom Gerät zu signieren oder gegebenenfalls komplett zu verschlüsseln. Die Kommunikationsteilnehmer müssen in die Lage versetzt werden sich als legitime Netzwerkteilnehmer zu authentifizieren und zusätzlich ihre Kommunikationsinhalte vor dem Zugriff durch andere, nicht authentifizierte Teilnehmer zu schützen. Abhängig von den Sicherheits- und sonstigen Betriebsanforderungen bedeutet dies üblicherweise den Schutz der Nachricht vor Modifikation der Inhalte durch unerwünschte Netzwerkteilnehmer oder auch den Schutz des Nachrichteninhalts vor lesendem Zugriff durch unerwünschte Teilnehmer.

Aus der oben genannten Veröffentlichung http://de.wikipedia.org/wiki/Ethernet ist ferner bekannt, kryptografische Methoden zum Schutz der Integrität der Kommunikation einzusetzen. Typischerweise werden hierzu entweder gemeinsam vereinbarte Schlüssel (shared secrets) oder asymmetrische Schlüsselpaare (private/public keys) verwendet. Da ein Anlagennetzwerk aus vielen Netzwerkteilnehmern besteht, ist die Verwaltung der Schlüssel mit einem erheblichen manuellen Aufwand verbunden oder erzwingt die Einführung von automatisierten Diensten wie Schlüsselverteilung und Zertifikatsverwaltung. Jedoch darf die Einführung einer solchen Infrastruktur weder zu einer Reduktion der Verfügbarkeit des Automatisierungssystems führen, noch sollte sie weitere Angriffsmöglichkeiten für einen potentiellen Eindringling bieten. Zusätzlich ist es eine Notwendigkeit, den zusätzlichen Aufwand für den Anlagenbetreiber und das Bedienpersonal so gering wie irgend möglich zu halten.

Der Erfindung liegt daher die Aufgabe zugrunde, ein Prozessleitsystem anzugeben, dessen Teilnehmer unter Verwendung von Ethernet Technologien miteinander kommunizieren, wobei die Integrität der Kommunikation bei geringem Aufwand geschützt ist.

Erfindungsgemäß wird diese Aufgabe mit den Mitteln des Patentanspruchs 1 gelöst. Vorteilhafte Ausgestaltungen der Erfindung sind in den rückbezogenen Ansprüchen angegeben.

Die Erfindung geht von einem Prozessleitsystem aus, dessen Integrität der Kommunikation auf dem Austausch von Zertifikaten basiert.

Erfindungsgemäß weist das Prozessleitsystem eine zentrale Zertifizierungsstelle auf, die integraler Bestandteil des Prozessleitsystems ist und deren Aufgabe in der Zuweisung und Verteilung der Zertifikate besteht. Diese Zertifizierungsstelle ist vorzugsweise auf einem der Rechner des Systems als Dienst installiert. Alternativ ist die Zertifizierungsstelle über eine separate Systemkomponente an das Prozessleitsystem angebunden.

Vorteilhafterweise werden dabei die vorhandenen Funktionen und Elemente des verteilten Prozessleitsystems genutzt, um eine Infrastruktur zur Schlüssel- und Zertifikatsverwaltung aufzubauen. Dabei wird eine sichere Infrastruktur zur Schlüssel- und Zertifikatsverwaltung für ein Prozessleitsystem erreicht, ohne dessen Verfügbarkeit zu reduzieren und ohne Einführung neuer Paradigmen für die Beobachtung und den Betrieb des Prozessleitsystems. Folglich bleibt der Aufwand für die Implementierung und Betrieb der Infrastruktur zur Schlüssel- und Zertifikatsverwaltung in das Prozessleitsystem gering.

Daraus ergibt sich, dass das beschriebene Verfahren mit minimalem Mehraufwand und Kosten für den Betrieb des Prozessleitsystems eingeführt werden kann.

Die Laufzeitfunktionen des Prozessleitsystems sind zumindest zeitweilig von der Verfügbarkeit der Zertifizierungsstelle abhängig. Insbesondere wird davon ausgegangen, dass die Zertifizierungsstelle gebraucht wird um auslaufende Zertifikate zu erneuern, sie wird periodisch gebraucht um aktualisierte Listen von zwischenzeitlich annullierten Zertifikaten zu verteilen, im Falle der eines kompromittierten Zertifikats muss sie über diesen Umstand informiert werden. Es scheint daher zweckmäßig, die Funktion der Zertifizierungsstelle mit den gleichen Methoden zu überwachen, die auch auf andere elementare Funktionen des Prozessleitsystems angewendet werden. Zusätzlich werden relevante Ereignisse mit Bezug auf die Zertifikatsverwaltung wie zum Beispiel die Aktualisierung abgelaufener Zertifikate oder das Zurückziehen kompromittierte Zertifikate mit den Methoden des Prozessleitsystems protokolliert und wenn notwendig dem Anlagenbediener visualisiert.

Zur Ausgabe von Zertifikaten wird die Zertifizierungsstelle in zwei Fällen benötigt:
a) beim Hinzufügen weiterer Netzwerkteilnehmer, um für den neuen Netzwerkteilnehmer ein Zertifikat zu erstellen,
b) zur Erneuerung existierender Zertifikate im System.

Zusätzlich wird abhängig von der gewählten Art der Verteilung von Rückrufinformationen, welche entweder in Form von im System verteilten Certificate Revocation Lists (CRL) oder durch eine Validierung des Zertifikats bei jedem Zugriff erfolgen kann, die Zertifizierungsstelle gebraucht, um zu bestimmten Zeitpunkten eben diese zu aktualisieren in dem sie die Certificate Revocation Lists (CRL) neu erstellt und signiert. Im Falle, dass ein privater Schlüssel eines der Netzwerkteilnehmer kompromittiert wird, zieht die Zertifizierungsstelle das kompromittierte Zertifikat zurück und erstellt eine aktualisierte CRL. Der Netzwerkteilnehmer muss anschließend mit einem neu generierten Schlüssel wieder durch Vergabe eines Zertifikats in das Kommunikationsnetz aufgenommen werden.

Die Verfügbarkeitsanforderungen an die Zertifizierungsstelle sind verglichen mit anderen Funktionen des Prozessleitsystems nicht besonders hoch, jedoch ist eine begrenzte Zeitdauer zur Wiederherstellung ihrer Funktion (MTTR) sicherzustellen. Die Erfindung beschreibt verschiedene Methoden, dies zu erreichen:

Nach einem weiteren Merkmal der Erfindung ist vorgesehen, die Zertifizierungsstelle auf einer Systemkomponente mit hoher eigener Verfügbarkeit anzuordnen. Insbesondere kann hierzu eine sogenannte Prozessnahen Komponente (PNK) ausgewählt sein.

In einer ersten Ausführungsform der Erfindung wird die Zertifizierungsstelle kontinuierlich in Betrieb gehalten. Damit ist die Zertifizierungsstelle ständig verfügbar und die Zeitdauer zur Wiederherstellung ihrer Funktion (MTTR) ist faktisch gleich Null. Die Verfügbarkeit der Zertifizierungsstelle wird dem Bedienpersonal und Wartungspersonal der Anlage über die vorhandenen Alarmierungsfunktionen des Prozessleitsystems angezeigt. In diesem Falle kann es sinnvoll sein, die Zertifizierungsstelle auch Validierung der Zertifikate bei jedem Zugriff zu nutzen.

In einer zweiten Ausführungsform der Erfindung wird die Zertifizierungsstelle abgeschaltet, solange ihre Funktion im Prozessleitsystem nicht benötigt wird. Vorteilhafterweise wird mit dieser Maßnahme weitgehend verhindert, dass die Zertifizierungsstelle als Ziel von äußeren Angriffen erreicht wird.

Nach einem weiteren Merkmal der Erfindung wird die Inbetriebsetzung der Zertifizierungsstelle durch eine zentrale Systemfunktion initiiert, die die verbleibende Restlaufzeit der Zertifikate der Netzwerkteilnehmer ermittelt und bei bevorstehendem Ablauf der Laufzeit die Aktivierung der Zertifizierungsstelle veranlasst.

Nach einem alternativen Merkmal der Erfindung wird die Inbetriebsetzung der Zertifizierungsstelle dezentral durch die einzelnen Netzwerkteilnehmer initiiert, die die Gültigkeit ihrer Zertifikatsinformationen selbst überwachen.

In beiden Fällen wird ein Systemalarm generiert, wenn die Zertifizierungsstelle im Kommunikationsnetzwerk nicht verfügbar ist.

Nach einem weiteren Merkmal der Erfindung umfasst das Prozessleitsystem ein Wartungsmanagementsystem. Mit einem solchen Wartungsmanagementsystem wird der Wartungszustand der an das Prozessleitsystem angeschlossenen komplexen Komponenten, wie beispielsweise Feldgeräte, verwaltet. Um die Verfügbarkeit zu erhöhen, kann vorgesehen sein, einen Arbeitsauftrag mit den zur Wiederherstellung der Funktion der Zertifizierungsstelle notwendigen Maßnahmen durch das Wartungspersonal in das angeschlossene Wartungsmanagementsystem abzusetzen. Im Einzelnen kann dazu kann vorgesehen sein, die einzuleitenden Maßnahmen direkt dem Prozessalarm anzufügen. Alternativ kann vorgesehen sein, eine Aktion in dem an das Prozessleitsystem angeschlossenen Wartungsmanagementsystem (CMMS) direkt auszulösen.

Vorteilhafterweise gelingt es auf diese Weise mit geringem Aufwand für den Fall Korrekturmaßnahmen einzuleiten, falls die Zertifizierungsstelle nicht verfügbar ist. Nach einem weiteren Merkmal der Erfindung ist vorgesehen, die Funktionen der Schlüsselverwaltung mit dem Prozessleitsystem zu überwachen und zu protokollieren. Dazu wird das vorhandene Melde- und Protokollsystem des Prozessleitsystems verwendet, indem die Ereignisse in Form von Systemmeldungen erfasst und gespeichert werden. In solcher Form stehen sie dann gemeinsam mit anderen Meldungen für spätere Archivierung, Abfrage und Analyse zur Verfügung.

Vorteilhafterweise wird ohne spürbare Beeinträchtigung des Betriebs des Prozessleitsystems die Erneuerung von Zertifikaten für spätere Diagnosen und Analysen protokolliert.

Nach einem weiteren Merkmal der Erfindung ist vorgesehen, den erfolgreichen Rückruf von Zertifikaten mit den Funktionen des Prozessleitsystems zu überwachen.

Der Rückruf eines Zertifikats, das heißt die aktive Auflösung einer Vertrauensbeziehung vor Ablauf der vereinbarten Zeit hat sich - insbesondere in einer offenen und sich verändernden Umgebung wie dem Internet - als schwierig zu implementieren erwiesen. Innerhalb eines Prozessleitsystems ist vorgesehen, die Überwachungs- und Meldefunktionen zu nutzen, um den Prozess des Rückrufs zu überwachen und sicherzustellen, dass die Information von allen Netzwerkteilnehmern verarbeitet wurde. Dazu ist im Einzelnen vorgesehen, den Anlagenbediener zu warnen, falls einzelne Komponenten für den Rückruf nicht erreichbar waren und deshalb potentiell mit Daten unsicherer Herkunft operieren.

Nach einem weiteren Merkmal der Erfindung ist vorgesehen, dass ein Prozessleitsystem aktiv nach nicht authentifizierten Zugriffsversuchen sucht und diese meldet, oder sogar Netzwerkteilnehmer von denen entweder solche Kommunikation ausgeht, oder die nicht über die letzten Certificate Revocation Lists, die eine Zusammenfassung der ungültigen Zertifikate enthält, verfügen, aktiv von der Netzwerkteilnahme ausschließt.

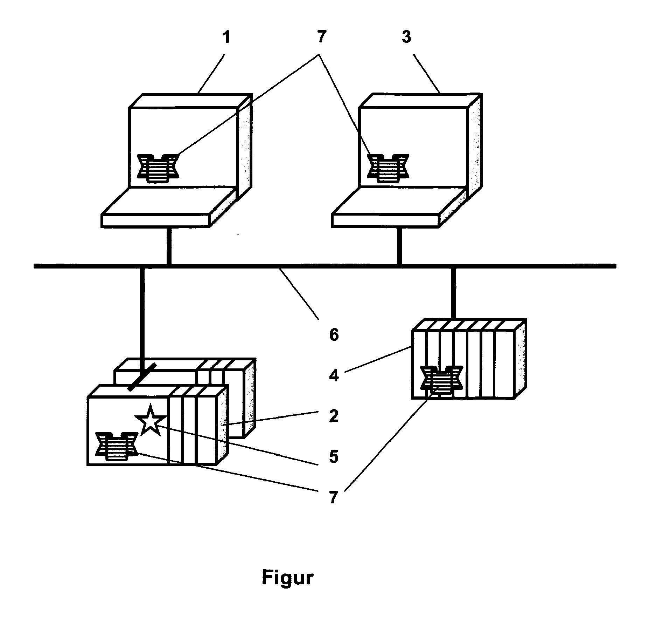

Die Erfindung wird nachstehend anhand eines Ausführungsbeispiels näher erläutert. In der einzigen Figur ist ein Prozessleitsystem im Umfang seiner erfindungswesentlichen Komponenten dargestellt. Das Prozessleitsystem besteht aus einer Mehrzahl räumlich verteilter, miteinander vernetzter Netzwerkteilnehmer **1, 2, 3** und **4,** die über ein über ein Kommunikationsnetzwerk **6** miteinander verbunden sind. Die Integrität der Kommunikation zwischen den Netzwerkteilnehmern **1, 2, 3** und **4** ist durch den Austausch von Zertifikaten **7** gesichert.

Die Netzwerkteilnehmer **1, 2, 3** und **4** haben innerhalb des Prozessleitsystems verschiedene Aufgaben. So ist der Netzwerkteilnehmer **2** ist ausgewählt, als zentrale Zertifizierungsstelle **5** im Prozessleitsystem die Zertifikate **7** zuzuweisen und zu verteilen. Die Zertifizierungsstelle **5** ist als integraler Bestandteil des Prozessleitsystems auf einem Netzwerkteilnehmer **2** des Prozessleitsystems als Dienst installiert. Vorteilhafterweise sind dadurch zusätzliche Netzwerkteilnehmer im Prozessleitsystem verzichtbar.

Der Netzwerkteilnehmer **2** ist redundant ausgeführt und hat dadurch eine sehr hohe Verfügbarkeit im Prozessleitsystem. Die Zertifizierungsstelle **5** ist auf dem hochverfügbaren Netzwerkteilnehmer **2** angeordnet und ist damit vorteilhafterweise gleichwohl hochverfügbar.

In einer alternativen Ausführungsform kann die Zertifizierungsstelle **5** auch auf einer Prozessnahen Komponente angeordnet sein. Darüber hinaus kann die Zertifizierungsstelle **5** auch über eine separate Systemkomponente an das Prozessleitsystem angebunden angeordnet sein.

Unabhängig von dem Ort der Zertifizierungsstelle **5** im Prozessleitsystem kann vorgesehen sein, dieselbe kontinuierlich in Betrieb zu halten. Vorteilhafterweise ist damit die jederzeitige Zuweisung und Verteilung der Zertifikate **7** im gesamten Prozessleitsystem gegeben.

In einer alternativen Ausführungsform kann vorgesehen sein, die Zertifizierungsstelle **5** bedarfsweise in Abhängigkeit von der verbleibenden Restlaufzeit der Zertifikate **7** der Netzwerkteilnehmer **1, 2, 3** und **4** in Betrieb zu nehmen und die Inbetriebsetzung durch eine zentrale Systemfunktion zu initiieren.

Insbesondere kann vorgesehen sein, die Zertifizierungsstelle **5** bedarfsweise in Abhängigkeit von der verbleibenden Restlaufzeit der Zertifikate **7** der Netzwerkteilnehmer **1, 2, 3** und **4** in Betrieb zu nehmen und die Inbetriebsetzung dezentral durch die einzelnen Netzwerkteilnehmer **1, 2, 3** und **4** zu initiieren. Vorteilhafterweise wird die Verfügbarkeit der Zertifizierungsstelle **5** dem Bedienpersonal und Wartungspersonal der Anlage über die vorhandenen Alarmierungsfunktionen des Prozessleitsystems angezeigt.

In weiterer Ausbildung des Prozessleitsystems ist vorgesehen, einen Systemalarm zu generieren, wenn die Zertifizierungsstelle **5** im Kommunikationsnetzwerk **6** nicht verfügbar ist.

In weiterer Ausgestaltung der Erfindung ist ein Wartungsmanagementsystem zur Verwaltung der an das Prozessleitsystem angeschlossenen komplexen Komponenten vorgesehen und ausgebildet, um Maßnahmen zur Verwaltung der Zertifikate einzuleiten. Typischerweise geschieht dies durch das Starten eines Dienstes, entweder durch einen manuellen Eingriff des Bedieners oder automatisch durch das System.

Im Einzelnen kann vorgesehen sein, die einzuleitende Maßnahme einem Prozessalarm beizufügen. Vorteilhafterweise werden dabei die bereits im Prozessleitsystem implementierten Methoden zur Verwaltung der Zertifikate benutzt, so dass die Implementierung neuer, spezieller Methoden verzichtbar ist.

Alternativ kann vorgesehen sein, die einzuleitende Maßnahme in dem Wartungsmanagementsystem direkt auszulösen, beispielsweise bei Nichtverfügbarkeit eines Dienstes manuelle Eingriffe wie das Einschalten von Komponenten oder Starten von Softwarediensten.

In einer weiteren Ausprägung ist das vorhandene Melde- und Protokollsystem des Prozessleitsystems ausgebildet, die Funktionen der Schlüsselverwaltung mit dem Prozessleitsystem zu überwachen und zu protokollieren, indem die Ereignisse in Form von Systemmeldungen erfasst und gespeichert werden.

Insbesondere sind die Funktionen des Prozessleitsystems ausgebildet, den erfolgreichen Rückruf von Zertifikaten 7 zu überwachen.

Darüber hinaus die sind Funktionen des Prozessleitsystems ausgebildet, aktiv nach nicht authentifizierten Zugriffsversuchen zu suchen und diese zu melden. Dazu wird ähnlich wie beim Ausfall einer Systemkomponente ein Systemalarm generiert und sowohl dem Anlagenbediener angezeigt als auch in Protokollen erfasst.

In einer weiteren Ausgestaltung ist auch denkbar, dass sich das System bei vermuteten Einbruchsversuchen in vorher definierte sichere Systemzustände bringt, um weiteren Schaden für die automatisierte Anlage abzuwenden.

In weiterer Ausgestaltung der Erfindung sind die Funktionen des Prozessleitsystems ausgebildet, Netzwerkteilnehmer **1, 3** oder **4** zu ermitteln, die nicht authentifiziert auf das Kommunikationsnetzwerk **6** zugreifen.

Darüber hinaus sind die Funktionen des Prozessleitsystem ausgebildet, Netzwerkteilnehmer **1, 3** oder **4** von der Kommunikation auszuschließen, die nicht über die letzten Certificate Revocation Lists verfügen.

In einer weiteren Ausgestaltung der Erfindung sind die Funktionen des Prozessleitsystems ausgebildet, die vom System automatisierte Anlage im Falle von nicht authentifizierten Zugriffsversuchen in einen vordefinierten Zustand zu bringen. Dabei wird die Anlage in einen sicheren Zustand versetzt. Dies kann beispielsweise durch Abschalten von Anlagenteilen geschehen. Darüber hinaus auch Teile der Anlage vom Rest isoliert werden.

### Bezugszeichenliste

- 1, 2, 3, 4: Netzwerkteilnehmer
- 5: Zertifizierungsstelle
- 6: Kommunikationsnetzwerk
- 7: Zertifikat

## Patentansprüche

1. Prozessleitsystem bestehend aus einer Mehrzahl räumlich verteilter, miteinander vernetzter Netzwerkteilnehmer (1,2,3,4) mit gesicherter Kommunikation zwischen den Netzwerkteilnehmern (1,2,3,4), wobei die Integrität der Kommunikation auf dem Austausch von Zertifikaten (7) basiert,
**dadurch gekennzeichnet,**
**dass** das Prozessleitsystem eine zentrale Zertifizierungsstelle (5) aufweist, die integraler Bestandteil des Prozessleitsystems ist und die Zertifikate (7) zuweist und verteilt.

2. Prozessleitsystem nach Anspruch 1
**dadurch gekennzeichnet,**
**dass** die Zertifizierungsstelle (5) auf einem Netzwerkteilnehmer (2) des Prozessleitsystems als Dienst installiert ist.

3. Prozessleitsystem nach Anspruch 1
**dadurch gekennzeichnet,**
**dass** die Zertifizierungsstelle (5) über eine separate Systemkomponente an das Prozessleitsystem angebunden ist.

4. Prozessleitsystem nach einem der vorstehenden Ansprüche
**dadurch gekennzeichnet,**
**dass** die Zertifizierungsstelle (5) auf einer Systemkomponente mit hoher eigener Verfügbarkeit angeordnet ist.

5. Prozessleitsystem nach Anspruch 1
**dadurch gekennzeichnet,**
**dass** die Zertifizierungsstelle (5) auf einer Prozessnahen Komponente angeordnet ist.

6. Prozessleitsystem nach einem der vorstehenden Ansprüche
**dadurch gekennzeichnet,**
**dass** die Zertifizierungsstelle (5) kontinuierlich in Betrieb gehalten ist.

7. Prozessleitsystem nach einem der Ansprüche 1 bis 5
**dadurch gekennzeichnet,**
**dass** die Zertifizierungsstelle (5) bedarfsweise in Abhängigkeit von der verbleibenden Restlaufzeit der Zertifikate (7) der Netzwerkteilnehmer (1,2,3,4) in Betrieb ist und die Inbetriebsetzung durch eine zentrale Systemfunktion initiierbar ist.

8. Prozessleitsystem nach einem der Ansprüche 1 bis 5
**dadurch gekennzeichnet,**
**dass** die Zertifizierungsstelle (5) bedarfsweise in Abhängigkeit von der verbleibenden Restlaufzeit der Zertifikate (7) der Netzwerkteilnehmer (1,2,3,4) in Betrieb ist und die Inbetriebsetzung dezentral durch die einzelnen Netzwerkteilnehmer (1,2,3,4) initiierbar ist.

9. Prozessleitsystem nach einem der vorstehenden Ansprüche
**dadurch gekennzeichnet,**
**dass** die Verfügbarkeit der Zertifizierungsstelle (5) dem Bedienpersonal und Wartungspersonal der Anlage über die vorhandenen Alarmierungsfunktionen des Prozessleitsystems anzeigbar ist.

10. Prozessleitsystem nach einem der Ansprüche 1 bis 8
**dadurch gekennzeichnet,**
**dass** das Prozessleitsystem ausgebildet ist, einen Systemalarm zu generieren, wenn die Zertifizierungsstelle (5) im Kommunikationsnetzwerk (6) nicht verfügbar ist.

11. Prozessleitsystem nach Anspruch 1
**dadurch gekennzeichnet,**
**dass** ein Wartungsmanagementsystem zur Verwaltung der an das Prozessleitsystem angeschlossenen komplexen Komponenten vorgesehen und ausgebildet ist, um Maßnahmen des Wartungspersonals zur Verwaltung der Zertifikate einzuleiten.

12. Prozessleitsystem nach Anspruch 11
**dadurch gekennzeichnet,**
**dass** die einzuleitende Maßnahme einem Prozessalarm beigefügt ist.

13. Prozessleitsystem nach Anspruch 11
**dadurch gekennzeichnet,**
**dass** die einzuleitende Maßnahme in dem Wartungsmanagementsystem direkt auslösbar ist.

14. Prozessleitsystem nach Anspruch 1
**dadurch gekennzeichnet,**
**dass** das vorhandene Melde- und Protokollsystem des Prozessleitsystems ausgebildet ist, die Funktionen der Schlüsselverwaltung mit dem Prozessleitsystem zu überwachen und zu protokollieren, indem die Ereignisse in Form von Systemmeldungen erfasst und gespeichert werden.

15. Prozessleitsystem nach Anspruch 14
**dadurch gekennzeichnet,**
**dass** die Funktionen des Prozessleitsystem ausgebildet sind, den erfolgreichen Rückruf von Zertifikaten (7) zu überwachen.

16. Prozessleitsystem nach Anspruch 1
**dadurch gekennzeichnet,**
**dass** die Funktionen des Prozessleitsystem ausgebildet sind, aktiv nach nicht authentifizierten Zugriffsversuchen zu suchen und diese zu melden.

17. Prozessleitsystem nach Anspruch 1
**dadurch gekennzeichnet,**
**dass** die Funktionen des Prozessleitsystem ausgebildet sind, Netzwerkteilnehmer (1, 3,4) zu ermitteln, die nicht authentifiziert auf das Kommunikationsnetzwerk (6) zugreifen.

18. Prozessleitsystem nach Anspruch 17
**dadurch gekennzeichnet,**
**dass** die Funktionen des Prozessleitsystem ausgebildet sind, Netzwerkteilnehmer (1, 3,4) von der Kommunikation auszuschließen, die nicht authentifiziert auf das Kommunikationsnetzwerk (6) zugreifen.

19. Prozessleitsystem nach Anspruch 17
**dadurch gekennzeichnet,**
**dass** die Funktionen des Prozessleitsystem ausgebildet sind, Netzwerkteilnehmer (1, 3,4) von der Kommunikation auszuschließen, die nicht über die letzten Certificate Revocation Lists verfügen.

20. Prozessleitsystem nach Anspruch 17
**dadurch gekennzeichnet,**
**dass** die Funktionen des Prozessleitsystems ausgebildet sind, die vom System automatisierte Anlage im Falle von nicht authentifizierten Zugriffsversuchen in einen vordefinierten Zustand zu bringen.
